# EUROPÄISCHE PATENTSCHRIFT

(11) **EP 1 518 665 B1**
(45) Veröffentlichungstag und Bekanntmachung des Hinweises auf die Patenterteilung: **11.07.2007**
(21) Anmeldenummer: 04104343.1
(22) Anmeldetag: 09.09.2004
(51) Int. Cl.: B29D 30/30

(54) **Verfahren zur Positionierung eines streifenförmigen Reifenaufbauteiles auf einer Reifenaufbaumaschine**
Method of positioning a stripe-like tyre component on a tyre building machine
Procédé de positionnement d'un élément de construction de pneumatiques en forme de ruban sur une machine de confection de pneumatiques

(30) Priorität: 23.09.2003 DE 10343846
(43) Veröffentlichungstag der Anmeldung: 30.03.2005
(73) Patentinhaber: Continental Aktiengesellschaft, 30165 Hannover (DE)
(72) Erfinder: Seevers, Jörn, Dr., 31303 Burgdorf (DE); Homt, Günter, 30823 Garbsen (DE)

(56) Entgegenhaltungen:
- EP-A- 0 693 450
- DE-A1- 1 556 542
- US-A- 4 095 731
- US-A- 4 577 854
- US-A- 4 714 505
- US-A- 5 868 386
- US-B1- 6 443 389

## Beschreibung

Die Erfindung betrifft ein Verfahren zur Positionierung eines streifenförmigen Reifenaufbauteiles auf einer Reifenaufbaumaschine.

Die konventionelle Herstellung von Luftreifen erfolgt an Reifenaufbautrommeln, bei denen einzelne Reifenaufbauteile in Form von unvulkanisierten Gummistreifen nacheinander auf eine Reifenaufbautrommel aufgewickelt werden. Die Reifenaufbauteile werden über Transport- und Fördervorrichtungen der Reifenaufbautrommel zugeführt, die das Reifenaufbauteil in einer bestimmten Position auf die Reifenaufbautrommel auflegen. Die Transport-vorrichtung besteht in der Regel aus einem Transportband, auf dem das Reifenaufbauteil aufliegt. Ein Problem stellt u. a. die genaue Positionierung des Reifenaufbauteiles auf dem Transportband dar. Ein seitliches Verrutschen des Reifenaufbauteiles hat zur Folge, dass das Reifenaufbauteil nicht mehr kantengenau auf die Reifenaufbautrommel aufgelegt und dadurch die Fertigungsqualität des Reifens beeinträchtigt wird. Es ist daher bekannt, zur kantengenauen Positionierung des Reifenaufbauteiles auf beiden Längsseiten des Reifenaufbauteiles Führungsmittel vorzusehen, mit denen eine kantengenaue Ausrichtung des Reifenaufbauteiles auf dem Transportband erfolgt. Diese Art der Ausrichtung des Reifenaufbauteiles hat jedoch den Nachteil, dass sich eine Breitentoleranz des Reifenaufbauteiles auf beide Längsseiten auswirkt. Überschreitet das Reifenaufbauteil beispielsweise eine bestimmte Breitentoleranz, so bleibt dieser zwischen den Führungsmitteln stecken. Wird hingegen die zugelassene Breitentoleranz zwischen den Führungsmitteln zu groß gewählt, so kann das die Fertigungsqualität des Reifens beeinträchtigen.

In der US4095731 A und der DE 1556542 A sind unterschiedliche Vorrichtungen zum Zuführten von Reifenaufbauteilen offenbart.

Der Erfindung liegt die Aufgabe zugrunde, ein Verfahren zur Positionierung eines streifenförmigen Reifenaufbauteiles auf einer Reifenaufbaumaschine bereitzustellen, welches das Reifenaufbauteil auf eine einfache Art und Weise auf dem Transportmittel ausrichtet.

Gelöst wird die Aufgabe durch ein Verfahren gemäß Anspruch 1.

Ein Vorteil der Erfindung ist insbesondere darin zu sehen, dass durch das erfindungsgemäße Verfahren auf eine einfache Art und Weise eine kantengenaue Ausrichtung des Reifenaufbauteiles auf dem Transportmittel realisiert wird. Die pneumatischen Düsen erzeugen unterhalb des Reifenaufbauteiles ein leichtes Luftpolster und richten gleichzeitig eine Längsseite des Reifenaufbauteiles mittels der Luftströmung mit dem Führungsmittel aus. Dieses Verfahren hat außerdem den Vorteil, dass es sozusagen "berührungslos" durchgeführt wird und dadurch nicht die Haftungseigenschaften des Reifenaufbauteiles beeinträchtigt.

In einer vorteilhaften Weiterbildung der Erfindung ist vorgesehen, dass die pneumatische Düse eine Mehrkanaldüse ist. Dadurch wird der Effekt verstärkt, unterhalb des Reifenaufbauteiles ein Luftpolster zu erzeugen.

In einer weiteren vorteilhaften Weiterbildung der Erfindung ist vorgesehen, dass das Transportmittel ein Transportband ist. Das Transportband hat denVorteil, dass es luftundurchlässig ist und dadurch ein Luftpolster einfacher erreicht werden kann.

In einer weiteren vorteilhaften Weiterbildung der Erfindung ist vorgesehen, dass die pneumatische Düse im Wesentlichen senkrecht zur Transportrichtung und in einem Winkel von 10° - 30° zur Ausbreitungsebene des Reifenaufbauteiles angeordnet ist. Auf diese Weise kann der Energieeintrag zur Erzeugung des Luftpolsters gering gehalten werden.

In einer weiteren vorteilhaften Weiterbildung der Erfindung ist vorgesehen, dass das Führungsmittel luftdurchlässige Öffnungen aufweist. Dadurch wird ein Luftrückstau am Führungsmittel unterbunden, der dazu führen würde, dass sich die Längsseite des Reifenaufbauteiles nicht vollständig am Führungsmittel ausrichten kann.

In einer weiteren vorteilhaften Weiterbildung der Erfindung ist vorgesehen, dass das Führungsmittel ein Begrenzungsüberstand aufweist. Der Begrenzungsüberstand verhindert, dass das Reifenaufbauteil an seiner Längsseite über das Führungsmittel springt.

In einer weiteren vorteilhaften Weiterbildung der Erfindung ist vorgesehen, dass die pneumatische Düse mit einem pulsierenden Luftstrom betrieben wird. Der pulsierende Luftstrom bewirkt eine Energieeinsparung bei der Drucklufterzeugung.

In einer weiteren vorteilhaften Weiterbildung der Erfindung ist vorgesehen, dass der pulsierende Luftstrom mit einer Frequenz zwischen 0,5 und 5 Hz betrieben wird. Eine solche Frequenz ist optimal um ein ausreichendes Luftpolster zu erzeugen.

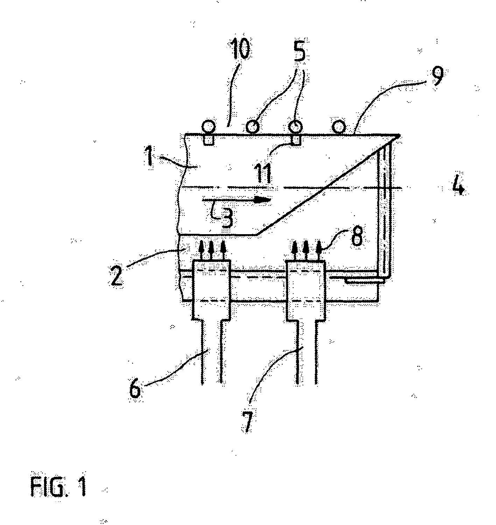

Anhand eines Ausführungsbeispiels soll die Erfindung näher erläutert werden.
Die einzige Figur zeigt eine Aufsicht des erfindungsgemäßen Verfahrens. Das Reifenaufbauteil 1 ist z. B. ein unvulkanisierter Gummistreifen oder ein Gummistreifen mit Festigkeitsträgern, der auf einer Reifenaufbaumaschine aufgewickelt wird. Das Reifenaufbauteil liegt auf dem Transportband 2 auf und wird in Transportrichtung 3 transportiert. An der Position 4 ist die Reifenaufbaumaschine angeordnet, auf die das Reifenaufbauteil 1 kantengenau aufgebracht werden soll. Das Reifenaufbauteil 1 wird zunächst auf dem Transportband 2 entlang von dem senkrecht zur Bildebene stehenden Führungsmittel 5 transportiert, welches parallel zur Transportrichtung 3 angeordnet ist. Auf der gegenüber liegenden Seite des Führungsmittels 5 sind zwei pneumatische Düsen 6 und 7 positioniert, die mit einem Luftstrahl 8 seitlich gegen das Reifenaufbauteil 1 blasen. Die pneumatischen Düsen 6 und 7 liegen im Wesentlichen in der gleichen Ausbreitungsebene wie das Reifenaufbauteil 1 und erzeugen durch die Luftstrahlen 8 ein leichtes Luftpolster zwischen Reifenaufbauteil 1 und Transportband 2. Gleichzeitig bewirkt das seitliche Anblasen durch die Luftstrahlen 8 eine Kraftkomponente, die das Reifenaufbauteil 1 in Richtung des Führungsmittels 5 drückt, wodurch die obere Längsseite 9 entlang des Führungsmittels 5 ausgerichtet wird. Das Reifenaufbauteil 1 liegt dadurch kantengenau am Führungsmittel 5 an. Zwischen dem Führungsmittel 5 und der oberen Längsseite 9 ist kein Spalt mehr vorhanden, wodurch das Reifenaufbauteil 1 kantengenau ausgerichtet in einer genau definierten Lage der Reifenaufbautrommel zugeführt wird. Bei den pneumatischen Düsen 6 und 7 handelt es sich um Mehrkanaldüsen, bei denen jeweils mehrere einzelne Luftstrahlen austreten. Ferner ist ein pulsierender Luftstrom mit einer Pulsfrequenz zwischen 0,5 und 5 Hz vorgesehen, wodurch insbesondere Druckluft eingespart werden kann. Das Führungsmittel 5 hat die Form eines Rechens, ist also luftdurchlässig mit Öffnungen 10 versehen, durch die Luftstrahlen 8 hindurchströmen können. Durch die Öffnungen 10 wird ein Luftrückstau vermieden, durch den verhindert werden würde, dass sich das Reifenaufbauteil 1 kantengenau an das Führungsmittel 5 anlegt. Am Führungsmittel 5 sind oberhalb des Reifenaufbauteiles 1 Begrenzungsüberstände 11 vorgesehen. Diese verhindern ein seitliches Überspringen des Reifenaufbauteiles 1 über das Führungsmittel 5.

### Bezugszeichenliste

### (ist Teil der Beschreibung)

- 1: Reifenaufbauteil
- 2: Transportband
- 3: Transportrichtung
- 4: Position der Reifenaufbaumaschine
- 5: Führungsmittel
- 6: pneumatische Düse
- 7: pneumatische Düse
- 8: Luftstrahl
- 9: obere Längsseite des Reifenaufbauteiles
- 10: Öffnung
- 11: Begrenzungsüberstand

## Patentansprüche

1. Verfahren zur Positionierung eines streifenförmigen Reifenaufbauteiles (1) auf einer Reifenaufbaumaschine mit einem Transportmittel, mit folgenden Schritten:
- Transportierung des Reifenaufbauteiles (1) auf dem Transportmittel entlang eines Führungsmittels (5),
- Ausrichtung einer Längsseite (9) des Reifenaufbauteiles entlang des Führungsmittels mit mindestens einer pneumatischen Düse (6, 7)
- wobei die pneumatische Düse mit einem Luftstrahl seitlich gegen das Reifenaufbauteil bläst,
- und Zuführung des Reifenaufbauteiles (1) zur Reifenaufbaumaschine.

2. Verfahren nach Anspruch 1,
**dadurch gekennzeichnet, dass**
die pneumatische Düse (6, 7) eine Mehrkanaldüse ist.

3. Verfahren nach Anspruch 1 oder 2,
**dadurch gekennzeichnet, dass**
das Transportmittel ein Transportband (2) ist.

4. Verfahren nach einem der Ansprüche 1 bis 3,
**dadurch gekennzeichnet, dass**
die pneumatische Düse (6, 7) im Wesentlichen senkrecht zur Transportrichtung (3) und in einem Winkel von 10° - 30° zur Ausbreitungsebene des Reifenaufbauteiles (1) angeordnet ist.

5. Verfahren nach einem der Ansprüche 1 bis 4,
**dadurch gekennzeichnet, dass**
das Führungsmittel (5) luftdurchlässige Öffnungen (10) aufweist.

6. Verfahren nach einem der Ansprüche 1 bis 5,
**dadurch gekennzeichnet, dass**
das Führungsmittel (5) ein Begrenzungsüberstand (11) aufweist.

7. Verfahren nach einem der Ansprüche 1 bis 6,
**dadurch gekennzeichnet, dass**
die pneumatische Düse (6, 7) mit einem pulsierenden Luftstrom betrieben wird.

8. Verfahren nach einem der Ansprüche 1 bis 7,
**dadurch gekennzeichnet, dass**
der pulsierende Luftstrom mit einer Frequenz zwischen 0,5 und 5 Hz betrieben wird.

## Claims

1. Method of positioning a strip-like tyre building component (1) on a tyre building machine having a transporting means, with the following steps:
- transporting the tyre building component (1) on the transporting means along a guiding means (5),
- aligning a longitudinal side (9) of the tyre building component along the guiding means by at least one pneumatic nozzle (6, 7),
- the pneumatic nozzle blowing an air jet laterally against the tyre building component,
- and feeding the tyre building component (1) to the tyre building machine.

2. Method according to Claim 1, **characterized in that** the pneumatic nozzle (6, 7) is a multi-channel nozzle.

3. Method according to Claim 1 or 2, **characterized in that** the transporting means is a transporting belt (2).

4. Method according to one of Claims 1 to 3, **characterized in that** the pneumatic nozzle (6, 7) is arranged substantially perpendicular to the transporting direction (3) and at an angle of 10° - 30° to the plane of extent of the tyre building component (1).

5. Method according to one of Claims 1 to 4, **characterized in that** the guiding means (5) has air-permeable openings (10).

6. Method according to one of Claims 1 to 5, **characterized in that** the guiding means (5) has a delimiting overhang (11).

7. Method according to one of Claims 1 to 6, **characterized in that** the pneumatic nozzle (6, 7) is operated with a pulsating air stream.

8. Method according to one of Claims 1 to 7, **characterized in that** the pulsating air stream is operated at a frequency of between 0.5 and 5 Hz.

## Revendications

1. Procédé de positionnement d'un élément de construction de pneumatiques en forme de ruban (1) sur une machine de construction de pneumatiques comprenant un moyen de transport, comprenant les étapes suivantes :
- transport de l'élément de construction de pneumatiques (1) sur le moyen de transport le long d'un moyen de guidage (5),
- orientation d'un côté longitudinal (9) de l'élément de construction de pneumatiques le long du moyen de guidage avec au moins une buse pneumatique (6, 7),
- la buse pneumatique soufflant avec un jet d'air latéralement contre l'élément de construction de pneumatiques,
- et apport de l'élément de construction de pneumatiques (1) à la machine de construction de pneumatiques.

2. Procédé selon la revendication 1,
**caractérisé en ce que**
la buse pneumatique (6, 7) est une buse à plusieurs canaux.

3. Procédé selon la revendication 1 ou 2,
**caractérisé en ce que**
le moyen de transport est une bande transporteuse (2) .

4. Procédé selon l'une quelconque des revendications 1 à 3,
**caractérisé en ce que**
la buse pneumatique (6, 7) est disposée essentiellement perpendiculairement à la direction de transport (3) et suivant un angle de 10° à 30° par rapport au plan de propagation de l'élément de construction de pneumatiques (1).

5. Procédé selon l'une quelconque des revendications 1 à 4,
**caractérisé en ce que**
le moyen de guidage (5) présente des ouvertures perméables à l'air (10).

6. Procédé selon l'une quelconque des revendications 1 à 5,
**caractérisé en ce que**
le moyen de guidage (5) présente un bord de limitation (11).

7. Procédé selon l'une quelconque des revendications 1 à 6,
**caractérisé en ce que**
la buse pneumatique (6, 7) fonctionne avec un courant d'air pulsé.

8. Procédé selon l'une quelconque des revendications 1 à 7,
**caractérisé en ce que**
le courant d'air pulsé fonctionne à une fréquence comprise entre 0,5 et 5 Hz.
